# EUROPÄISCHE PATENTANMELDUNG

(11) **EP 2 829 898 A2**
(43) Veröffentlichungstag der Anmeldung: **28.01.2015**
(21) Anmeldenummer: 14002358.1
(22) Anmeldetag: 09.07.2014
(51) Int. Cl.: G02B 6/38

(54) **Drehkupplung zur Übertragung optischer Signale längs wenigstens zwei separater optischer Übertragungskanäle**

(30) Priorität: 23.07.2013 DE 102013012236
(71) Anmelder: Spinner GmbH, 83620 Westerham (DE)
(72) Erfinder: Doleschel, Andreas, 85653 Groß Helfendorf (DE); Friedsam, Gerhard, 83620 Feldkirchen (DE)
(74) Vertreter: Rösler, Uwe

(57) **Zusammenfassung**

Beschrieben wird eine Drehkupplung zur Übertragung optischer Signale längs wenigstens zwei separater optischer Übertragungskanäle (K1, K2), mit zwei um eine gemeinsame Drehachse (D) relativ zueinander drehbar gelagerten Kupplungskomponenten (1 , 2), an denen jeweils für jeden der wenigstens zwei Übertragungskanäle eine, der jeweils anderen Kupplungskomponente zugewandte Apertur angebracht ist, von denen pro Kupplungskomponente eine erste Apertur (A1, A3) mittig zur Drehachse angebracht und eine zweite Apertur (A2, A4) radial zur Drehachse beabstandet sind, sowie mit wenigstens einer ersten und zweiten, zwischen den Aperturen der Kupplungskomponenten angeordneten, optischen Umlenkeinheit (3, 4), die jeweils einen der beiden optischen Übertragungskanäle, der jeweils durch die erste Apertur (A1, A3) der einen, im weiteren ersten Kupplungskomponente sowie durch die zweite Apertur (A2, A4) der anderen, im weiteren zweiten Kupplungskomponente verläuft, umlenkt und von denen die erste optische Umlenkeinheit mit der ersten Kupplungskomponente und die zweite optische Umlenkeinheit mit der zweiten Kupplungskomponente drehbar um die Drehachse in Wirkverbindung stehen, wobei zwischen der ersten optischen Umlenkeinheit (3) und der mit dieser drehbar in Wirkverbindung stehenden ersten Kupplungskomponente (1) längs der Drehachse die zweite optische Umlenkeinheit (4) angeordnet ist.

Die Erfindung zeichnet sich dadurch aus, beide optische Umlenkeinheiten wenigstens zwei optische Reflektoren (R1, R2; R3, R4) umfassen, die jeweils mittel- oder unmittelbar über ein Halteelement (30, 40) starr miteinander verbunden sind, und dass ein Erstes der beiden Halteelemente (30) über eine die drehbare Wirkverbindung realisierende mechanische Getriebeeinheit (5) mit der ersten Kupplungskomponente mittel- oder unmittelbar in Eingriff steht.

## Beschreibung

### Technisches Gebiet

Die Erfindung bezieht sich auf eine Drehkupplung zur Übertragung optischer Signale längs wenigstens zwei separater optischer Übertragungskanäle, mit zwei um eine gemeinsame Drehachse relativ zueinander drehbar gelagerten Kupplungskomponenten.

### Stand der Technik

Optische Drehkupplungen oder optische Drehübertrager dienen zur Übertragung optischer Signale längs wenigstens eines optischen Übertragungskanals zwischen zwei um eine gemeinsame Drehachse drehbar gelagerten Komponenten oder Baugruppen. Für eine unterbrechungsfreie optische Signalübertragung längs eines optischen Übertragungskanals sind hierzu die Enden zweier Lichtwellenleiter in zwei um eine gemeinsame Drehachse relativ zueinander drehbar gelagerten Kupplungskomponenten angeordnet, so dass mit oder ohne Zwischenschaltung optischer Elemente gewährleistet ist, dass aus dem einen Lichtwellenleiterende austretende Lichtsignale auch während der Rotation beider Kupplungskomponenten zueinander möglichst verlustfrei in das gegenüberliegende Lichtwellenleiterende einkoppeln kann und umgekehrt.

In der EP 0 057 794 ist der Aufbau einer optischen Drehkupplung zur Übertragung optischer Signale längs eines einzigen optischen Übertragungskanals beschrieben. Die bekannte Drehkupplung weist zwei im Wesentlichen rotationssymmetrisch und längs einer gemeinsamen Drehachse drehbar zueinander gelagerte Kupplungskomponenten auf, die beide längs zur Drehachse jeweils Ausnehmungen zur Aufnahme eines Lichtwellenleiters vorsehen, so dass sich die Stirnseiten beider Lichtwellenleiter koaxial längs der Drehachse gegenüberliegend angeordnet sind. Zur Vergrößerung der Aperturen beider Lichtwellenleiterenden sind jeweils zylinderförmig ausgebildete Linsenkörper stirnseitig an beide Lichtwellenleiterenden platziert, die gemeinsam einen geringen Zwischenspalt einschließen, über den die optischen Signale trotz Rotation beider Kupplungskomponenten zueinander verlustfrei übertragen werden.

Gilt es hingegen mehr als einen optischen Übertragungskanal mit Hilfe einer optischen Drehkupplung zu übertragen so erhöht sich die Komplexität der Drehkupplung mit der Anzahl der zu übertragenden optischen Übertragungskanäle.

Der US 7,724,996 B2 ist eine optische Drehkupplung zur Übertragung von zwei optischen Übertragungskanälen zu entnehmen, die zwei drehbar um eine Drehachse gelagerte Kupplungskomponenten umfasst, die gemeinsam einen zylinderförmigen Hohlraum einschließen und an deren den Hohlraum axial begrenzende Stirnseiten die Aperturen von jeweils zwei Lichtwellenleiterenden angeordnet sind. Jeweils eine der beiden Aperturen ist mittig zur Drehachse und die andere jeweils zur Drehachse radial beabstandet angeordnet. Letztere ist mit einer Fokussieroptik zusätzlich versehen, durch die das aus der Apertur austretende Licht auf die jeweils mittig zur Drehachse angeordnete Apertur der gegenüberliegenden Kupplungskomponente abgebildet wird. Die bekannte optische Drehkupplung ist lediglich unidirektional mit einer vorgegebenen optischen Signalübertragungsrichtung einsetzbar.

Die Druckschrift US 7,515,782 B2 offenbart eine optische Drehkupplung zur Übertragung von zwei optischen Übertragungskanälen, von denen ein optischer Übertragungskanal koaxial zur Drehachse und somit rotationsinvariant angeordnet ist. Hierzu sind die Stirnseiten zweier Lichtwellenleiterenden beabstandet zueinander längs der Drehachse in jeweils zwei drehbar zueinander gelagerten Kupplungskomponenten fixiert. Ein zweiter optischer Übertragungskanal wird durch zwei weitere Lichtwellenleiter definiert, die parallel und beabstandet zur Drehachse jeweils in den einzelnen Kupplungskomponenten angebracht sind und deren Aperturen sich längs zur Drehachse stirnseitig gegenüberliegen. Zwischen beiden Aperturen angeordnete optische Reflektoren sorgen dafür, dass der Lichtweg des zweiten optischen Übertragungskanals mit dem rotationsinvarianten Lichtweg des ersten optischen Übertragungskanals überlagert wird. Hierzu sind geeignet gewählte halbdurchlässige Reflektoren, die längs der Drehachse und somit längs des ersten optischen Übertragungskanals angeordnet sind, vorgesehen.

Die Rotationsinvarianz eines rotationssymmetrisch um die Drehachse angeordneten optischen Übertragungskanals nutzt auch die in der Druckschrift US 4,842,355 beschriebene optische Drehkupplung. Zur Realisierung eines ersten optischen Übertragungskanals ist jeweils ein Lichtleiter längs zur Drehachse innerhalb zweier Kupplungskomponenten angeordnet, wobei sich stirnseitig an den Aperturen beider Lichtwellenleiter optische Abbildungselemente anschließen, durch die sich ein hohlzylinderförmiger Lichtweg zwischen beiden drehbar angeordneten Kupplungskomponenten ausbildet, der symmetrisch zur Drehachse verläuft, wodurch die Rotationsinvarianz erhalten bleibt. Zur Realisierung des zweiten optischen Übertragungskanals werden die Aperturen zweier weiterer Lichtwellenleiter zwischen den sich stirnseitig gegenüberliegenden optische Abbildungselementen angeordnet, so dass auch die dem zweiten optischen Übertragungskanal zugeordneten Aperturen zentrisch zur Drehachse liegen, wodurch eine rotationsinvariante optische Signalübertragung auch längs des zweiten optischen Übertragungskanal möglich ist.

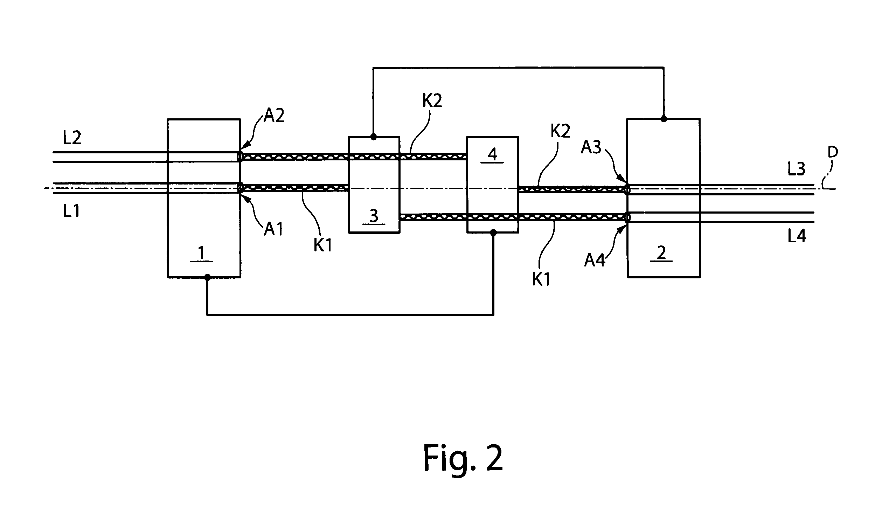

Eine mehrkanalartig ausgebildete optische Drehkupplung, insbesondere zur Übertragung optischer Signale wenigstens zweier optischer Übertragungskanäle K1, K2, ist der US 4,725,116 zu entnehmen, die zwei um eine gemeinsame Drehachse D, siehe hierzu die Schemadarstellung in Figur 2, relativ zueinander drehbar gelagerte Kupplungskomponenten 1, 2 vorsieht, in denen jeweils wenigstens zwei Lichtwellenleiter L1, L2, L3, L4 enden und deren zugeordnete Aperturen A1, A2, A3, A4, über die optische Signale mittel- oder unmittelbar ein- und/oder auskoppelbar sind, jeweils der anderen Kupplungskomponente 1, 2 zugewandt angeordnet sind, wobei pro Kupplungskomponente 1, 2 eine erste Apertur A1, A3 mittig zur Drehachse D und eine zweite Apertur A2, A4 radial zur Drehachse D beabstandet angebracht sind. Zwischen den sich axial zu Drehachse D einander zugewandt angeordneten Aperturen A1, A2, A3, A4 beider Kupplungskomponenten 1, 2 sind wenigstens eine erste und zweite optische Umlenkeinheit 4, 3 angeordnet, die jeweils einen der beiden optischen Übertragungskanäle K1, K2 derart umlenken, so dass ein erster optischer Übertragungskanal K1 durch die erste Apertur A1 der ersten Kupplungskomponente 1 sowie durch die zweite Apertur A4 der zweiten Kupplungskomponente 2 und ein zweiter optischer Übertragungskanal K2 durch die zweite Apertur A2 der ersten Kupplungskomponente 1 sowie durch die erste Apertur A3 der zweiten Kupplungskomponente 2 verlaufen. Hierzu sind die erste optische Übertragungseinheit 3 mit der zweiten Kupplungskomponente 2 sowie die zweite optische Umlenkeinheit 4 drehfest mit der ersten Kupplungskomponente 1 verbunden, wobei zwischen der zweiten optischen Umlenkeinheit 4 und der mit dieser drehbar in Wirkverbindung stehenden ersten Kupplungskomponente 1 längs der Drehachse D die erste optische Umlenkeinheit 3 angeordnet ist.

Für beide optische Umlenkeinheiten 3, 4 gilt es den Lichtweg eines der beiden optischen Übertragungskanäle K1, K2 vorzugsweise im Wege der Reflexion verlustfrei umzulenken und zugleich den Lichtweg des jeweils anderen optischen Übertragungskanals möglichst verlustfrei zu durchzulassen. Zu Zwecken einer drehfesten Verbindung zwischen der ersten optischen Umlenkeinheit 3 und der zweiten Kupplungskomponente 2 dient ein mit der zweiten Kupplungskomponente 2 mechanisch verbundener, koaxial zur Drehachse D angeordneter Befestigungstubus, an dem die erste optische Umlenkeinheit 3 fest gefügt ist. Die Tubuswand besteht aus einem für den zweiten optischen Übertragungskanal K2 transparenten Material. Die zweite optische Umlenkeinheit 4 weist zwei den zweiten optischen Übertragungskanal K2 von der zweiten Apertur A2 der ersten Kupplungskomponente zur ersten Apertur A3 der zweiten Kupplungskomponente oder umgekehrt umlenkende Reflektorelement auf, von denen ein Reflektorelement radial außerhalb und das andere radial innerhalb des transparent ausgebildeten Tubus angebracht sind. Zur mitdrehenden Kopplung des innerhalb des Befestigungstubus angebrachten Reflektorelementes an die von dem ersten Kupplungselement 1 ausgeführte Drehbewegung um die Drehachse D, dient eine magnetische Kupplung. Durch die magnetische Kupplung ist zumindest die Umlenkung des Lichtweges längs des in der Darstellung zweiten optischen Übertragungskanals K2, aufgrund auftretender Lageveränderungen beider magnetisch gekoppelter Reflektorelemente der zweiten optischen Umlenkeinheit zueinander, insbesondere in Form auftretender Schwingungen, optischen Verlusten unterlegen.

Aus WO 2002/096484 A2 ist ein Katheter für optische Untersuchungen bekannt, bei dem ein Lichtstrahl von der Untersuchungsstelle zurück zu einem Detektor geleitet wird. Der Lichtstrahl wird dabei über einen Koppler geführt, der ein um eine Achse drehbares Teil mit transparenten Stirnseiten aufweist, auf denen jeweils ein Prisma derart angeordnet ist, dass der radial von der Achse beabstandet ankommende Lichtstrahl durch die Prismen auf die Achse umgelenkt wird.

Die US 5,271,076 offenbart ein Planetengetriebe, um eine rotatorische Relativbewegung zwischen einem Prismarotor und einem rotierenden Halteelement für optische Fasern und Linsen zu ermöglichen.

### Darstellung der Erfindung

Ausgehend von der in der US 4,725,116 entnehmbaren bekannten optischen Drehkupplung zur Übertragung optischer Signale längs wenigstens zweier separater optischer Übertragungskanäle gilt es Maßnahmen zu treffen, durch die die Übertragungsqualität verbessert und insbesondere verlustbehaftete optische Dämpfungserscheinungen aufgrund auftretender Lageveränderungen unter den an der Lichtumlenkung beteiligten Reflektorelementen minimiert werden sollen. Darüber hinaus soll der optische und mechanische Aufbau einer derartigen Drehkupplungen vereinfacht werden, wodurch auch die Herstellkosten ohne Qualitätseinbußen gesenkt werden sollen.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung insbesondere unter Bezugnahme auf die illustrierten Ausführungsbeispiele zu entnehmen.

Die lösungsgemäße Drehkupplung geht von einer an sich bekannten optischen Drehkupplung aus, wie sie in der US 725,116 offenbart ist und die im Oberbegriff des Anspruches 1 enthaltenen Komponenten umfasst.

Zur Übertragung optischer Signale längs wenigstens zweier separater optischer Übertragungskanäle sind zwei um eine gemeinsame Achse relativ zueinander drehbar gelagerte Kupplungskomponenten vorgesehen. In beiden Kupplungskomponenten sind jeweils wenigstens zwei Ausnehmungen für die Aufnahme der Enden zweier Lichtwellenleiter eingebracht, denen jeweils in jeder Kupplungskomponente eine Apertur zur Aus- bzw. Einkopplung optischer Lichtsignale zugeordnet sind; eine erste Apertur ist jeweils mittig zur Drehachse, eine zweite Apertur ist radial zur Drehachse beabstandet angebracht. Zwischen den sich längs zur Drehachse jeweils zugewandt orientierten ersten und zweiten Aperturen beider Kupplungskomponenten sind wenigstens eine erste und zweite optische Umlenkeinheit angeordnet, die jeweils einen der beiden optischen Übertragungskanäle zwischen den Aperturen beider Kupplungselemente umzulenken vermögen. So vermag eine im Weiteren erste Umlenkeinheit den ersten optischen Übertragungskanal von der ersten Apertur der ersten Kupplungskomponente zur zweiten Apertur der zweiten Kupplungskomponente zu übertragen. Die zweite optische Umlenkeinheit hingegen vermag den zweiten optischen Übertragungskanal von der zweiten Apertur der ersten Kupplungskomponente in die erste Apertur der zweiten Kupplungskomponente zu übertragen. Vorzugsweise sind beide optischen Umlenkeinheiten derart ausgebildet, so dass die optischen Übertragungseigenschaften längs beider optischer Übertragungskanäle bidirektional sind. Zur unterbrechungsfreien optischen Signalübertragung befinden sich die erste optische Umlenkeinheit mit der zweiten Kupplungskomponente und die zweite optische Umlenkeinheit mit der ersten Kupplungskomponente drehbar um die Drehachse in Wirkverbindung, wobei zwischen der zweiten optischen Umlenkeinheit und der mit dieser drehbar in Wirkverbindung stehenden ersten Kupplungskomponente längs der Drehachse die erste optische Umlenkeinheit angeordnet ist.

Lösungsgemäß zeichnet sich die optische Drehkupplung dadurch aus, dass beide optische Umlenkeinheiten jeweils wenigstens zwei optische Reflektoren umfassen, die jeweils mittel- oder unmittelbar über ein Halteelement starr miteinander verbunden sind, unter Ausbildung einer mechanisch starren Fügeverbindung. Auf diese Weise ist sichergestellt, dass Lageveränderungen oder Relativschwingungen zwischen den starr miteinander verbundenen, optischen Reflektoren jeweils einer optischen Umlenkeinheit minimiert oder ganz ausgeschlossen werden können. Zum anderen erfolgt die Drehübertragung zwischen wenigstens einer Kupplungskomponente auf die mit ihr in drehbar um die Drehachse in Wirkverbindung stehende optische Umlenkeinheit mittels einer mechanischen Getriebeeinheit, die mittel- oder unmittelbar einerseits mit einer Kupplungskomponente und andererseits mit dem Halteelement der optischen Umlenkeinheit, das die wenigstens zwei optischen Reflektoren starr miteinander verbindet, in Wirkverbindung steht.

In einer bevorzugten Ausführungsform der optischen Drehkupplung ist eine nicht mit der mechanischen Getriebeeinheit in Eingriff stehende, im Weiteren als erste optische Umlenkeinheit bezeichnete Umlenkeinheit mechanisch starr und drehfest mit der zweiten Kupplungskomponente mittel- oder unmittelbar verbunden, die zwischen der ersten Kupplungskomponente und der zweiten optischen Umlenkeineinheit angeordnet ist und von der Drehbewegung der ersten Kupplungskomponente vollständig entkoppelt. Hierzu ist die erste optische Umlenkeinheit über einen hülsenartig ausgebildeten Abschnitt mit der zweiten Kupplungskomponente fest verbunden. Der hülsenförmige Abschnitt begrenzt radial einen inneren Hohlraum, der zumindest der ersten Kupplungskomponente zugewandt, ein offen ausgebildetes Hülsenende aufweist, durch das die zweite optische Umlenkeinheit in den Hohlraum des hülsenförmigen Abschnittes zumindest teilweise hineinragt. Der hülsenartige Abschnitt weist ferner längs seiner axialen Erstreckung zumindest eine in Umfangsrichtung des hülsenartigen Abschnittes lokal begrenzte Öffnung oder Ausnehmung auf, durch die ein radialer Eingriff der radial außerhalb des hülsenförmigen Abschnittes angeordneten Getriebeeinheit mit der von dem hülsenförmigen Abschnitt zumindest teilweise umfassten, ersten optischen Umlenkeinheit erfolgt.

In einer bevorzugten Ausführungsform ist die Getriebeeinheit in Form eines Stirnradgetriebes ausgebildet, das exzentrisch zur Drehachse innerhalb der Drehkupplung angeordnet ist und radial zur Drehachse außerhalb zu der weitgehend rotationssymmetrisch ausgebildeten ersten Kupplungskomponente, die sich, wie die weiteren Ausführungen zeigen, aus einzelnen Komponenten zusammensetzt, sowie des hülsenförmigen Abschnittes der zweiten Kupplungskomponente angeordnet ist. Dabei greift ein Stirnrad von zwei axial beabstandeten Stirnräder des Stirnradgetriebes in eine der ersten Kupplungskomponente zugehörige Verzahnungsstruktur und ein zweites Stirnrad in eine an der zweiten optischen Umlenkeinheit vorgesehene Verzahnungsstruktur, wobei die Getriebeeinheit zumindest einen Bereiche des axial zwischen der ersten Kupplungskomponente und der zweiten optischen Umlenkeinheit liegenden hülsenförmigen Abschnittes überbrückt.

In einer zweiten bevorzugten Ausführungsform ist die Getriebeeinheit als Hohlradgetriebe ausgebildet, das aus einem ringförmigen bzw. hohlzylinderförmigen Getriebekörper mit zwei axial beabstandeten, an der Ringinnenseite des Getriebekörpers angebrachten Getriebeverzahnungen besteht. Das Hohlradgetriebe umfasst radial aussenliegend zumindest Bereiche der ersten Kupplungskomponente, des mit der zweiten Kupplungskomponente starr verbundenen hülsenförmigen Abschnittes sowie der zweiten optischen Umlenkeinheit, wobei die dem Hohlradgetriebe zuordenbare Zylinderachse koparallel und beabstandet zur Drehachse angeordnet ist. Durch die exzentrische Lage des Hohlradgetriebes relativ zur Drehachse greifen die Getriebeverzahnungen lediglich in begrenzte Umfangssegmente der seitens der ersten Kupplungskomponente zugehörigen Verzahnungsstruktur sowie der an der zweiten optischen Umlenkeinheit vorgesehenen Verzahnungsstruktur ein. Auch im Falle der Ausbildung der Getriebeeinheit als Hohlradgetriebe überbrückt dieses zumindest einen Bereich des axial zwischen der ersten Kupplungskomponente und der zweiten optischen Umlenkeinheit liegenden hülsenförmigen Abschnittes. Weitere Einzelheiten hierzu sind der Beschreibung unter Bezugnahme auf die Figuren zu entnehmen.

Zu Zwecken einer möglichst verlustfreien Übertragung optischer Signale durch die optische Drehkupplung sind die für die Umlenkung der optischen Übertragungskanäle erforderlichen optischen Umlenkeinheiten derart ausgebildet, so dass die jeweils wenigstens zwei optischen Reflektoren pro optischer Umlenkeinheit starr über ein vorzugsweise hülsenförmig ausgebildetes Halteelement verbunden sind. Die starre Verbindung gewährleistet nicht nur die Vermeidung möglicher Lageveränderungen zwischen den optischen Reflektoren einer optischen Umlenkeinheit, vielmehr gewährleistet das die optischen Reflektoren starr miteinander verbindenden Halteelement eine hochgenaue Fügung und Ausrichtung der wenigstens zwei optischen Reflektoren in dem Halteelement.

Die Halteelemente der optischen Umlenkeinheiten sind in vorteilhafter Weise jeweils als längliche Hohlkörper mit einem in Längserstreckung des Hohlkörpers vollständig durchsetzenden Hohlkanals ausgebildet, dessen Hohlkanallängsachse mit der Drehachse der Drehkupplung zusammenfällt. An dem als Hohlkörper ausgebildeten Halteelement sind definierte Fügestellen bzw. Fügeflächen für die Anbringung transparenter Trägerelemente vorgesehen, an denen die optischen Reflektoren, bspw. in Form einer hochreflektierenden Beschichtung, bspw. einer Goldbeschichtung, aufgebracht sind. Die Trägerelemente können bspw. in Form transparenter Glasplatten ausgebildet sein, die an oder innerhalb des Hohlkörpers fest angebracht sind. Anstelle oder in Kombination mit dem Vorsehen hochreflektierender Beschichtungen auf dem Trägerelement bieten sich auch Umlenkprismen an, die an einer gemeinsamen planen Oberfläche des Trägerelementes angebracht werden können.

Insbesondere beim Einsatz der vorstehenden Umlenkprismen sieht eine bevorzugte Ausführungsform für die Ausbildung der ersten und zweiten optischen Umlenkeinheit jeweils wenigstens ein Trägerelement vor, das für wenigstens einen optischen Übertragungskanal transparent ist und an dem die wenigstens zwei optischen Reflektoren in Form von Umlenkprismen zur Umlenkung eines Übertragungskanals angebracht sind. Einer der beiden Reflektoren ist mittig zur Drehachse angebracht, der andere der beiden Reflektoren ist derart radial beabstandet zur Drehachse angebracht und sieht eine Flächenausdehnung bezogen zur Oberfläche des die Umlenkprismen tragenden Trägerelementes derart vor, so dass das außermittig angebrachte Umlenkprisma bei Rotation um die Drehachse eine Ringfläche überstreift, die von dem Lichtweg des optischen Übertragungskanals, der dieses Trägerelement lediglich verlustfrei durchdringt, nicht geschnitten wird.

Eine weitere bevorzugte Ausführungsform für die optische Drehkupplung sieht für die Ausbildung der ersten und zweiten optische Umlenkeinheit jeweils wenigstens zwei Trägerelemente vor, die für wenigstens einen optischen Übertragungskanal transparent sind und längs zur Drehachse beabstandet zueinander am Halteelement befestigt sind, wobei an einem der wenigstens zwei Trägerelement einer der beiden Reflektoren mittig zur Drehachse angebracht ist. Am anderen der wenigstens zwei Trägerelemente ist der andere der beiden Reflektoren radial zur Drehachse beabstandet angebracht, wobei der radial beabstandet zur Drehachse angebrachte Reflektor, eine diesem bei Rotation um die Drehachse zuordenbare Ringfläche überstreift, die den anderen, beide transparente Trägerelemente durchsetzenden, optischen Übertragungskanal nicht schneidet. In diesem Fall sind die separat an den Trägerelementen angebrachten Reflektoren jeweils als eine hoch reflektierende, lokal begrenzte Beschichtung ausgebildet.

Eine weitere bevorzugte Ausführungsform für die optische Drehkupplung sieht für die Ausbildung der ersten und zweiten optischen Umlenkeinheit jeweils ein Trägerelement vor, das für wenigstens einen optischen Übertragungskanal transparent ist und den mittig zur Drehachse angeordneten Reflektor trägt, Wie auch bei allen vorstehend erwähnten transparenten Trägerelementen eignet sich hierzu eine planparallele Glasscheibe oder ein Glasplättchen. Das transparente Platten- oder Plättchenelement ist möglichst dünnwandig auszubilden ist, um einen geometrischen Strahlversatz bei einem schräg zur Glasscheibenoberfläche orientierten Strahlverlauf vernachlässigbar gering zu halten. Das glasscheibenartige Trägerelement ist vorzugsweise innerhalb des Hohlkanals angeordnet und längs seines gesamten Umfangsrandes von dem als Hohlkörper ausgebildeten Halteelement umfasst. Der andere Reflektor ist hingegen mit einem radialen Abstand zur Drehachse am Halteelement selbst mittel- oder unmittelbar angebracht, wobei dessen radialer Abstand zur Drehachse vorzugsweise größer ist als der radiale Abstand zur Drehachse mit dem die jeweils zweite Apertur an der ersten und zweiten Kupplungskomponente angebracht sind.

Zur Umlenkung des Lichtweges beider optischer Übertragungskanäle gilt es die optischen Reflektoren der ersten und zweiten optischen Umlenkeinheiten unter Maßgabe des optischen Reflexionsgesetzes derart einander auszurichten, so dass die gewünschte Strahlumlenkung zwischen den jeweils ersten und zweiten Aperturen der ersten und zweiten Kupplungskomponenten erfolgt. Hierzu ist das wenigstens eine Trägerelement mit den darauf befindlichen optischen Reflektoren in geeigneter Weise relativ zur Drehachse bzw. zu einer dem Halteelement zuordenbaren Hohlkanalachse geneigt am Halteelement anzubringen. So kann dem wenigstens einen transparenten Trägerelement eine den wenigstens einen optischen Reflektor tragende, ebene Oberfläche zugeordnet werden, die mit der Längsrichtung bzw. der Hohlkanalachse des Hohlkanals einen Winkel α = 90 °± 45° einschließt und dabei den Hohlkanal in seinem Querschnitt wenigstens teilweise durchsetzt, d.h. das transparente Trägerelement muss nicht notwendigerweise den gesamten Querschnitt des Hohlkanals des Trägerelementes überragen.

Für die Erläuterung weiterer, die lösungsgemäße optische Drehkupplung in vorteilhafter Weise ausbildender Konstruktionsmerkmale sei auf die nachfolgenden Figuren verwiesen, die konkrete Ausführungsbeispiele illustrieren.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a: Längsschnittdarstellung durch eine erste lösungsgemäße Kupplungsvariante,
- Fig. 1b: Längsschnittdarstellung durch eine zweite lösungsgemäße Kupplungsvariante
- Fig. 1c: alternatives Ausführungsbeispiel zur Realisierung der ersten und zweiten optischen Umlenkeinheit sowie
- Fig. 2: schematische Darstellung zum Aufbau einer optischen Drehkupplung nach Stand der Technik.

### Wege zur Ausführung der Erfindung, gewerbliche Verwendbarkeit

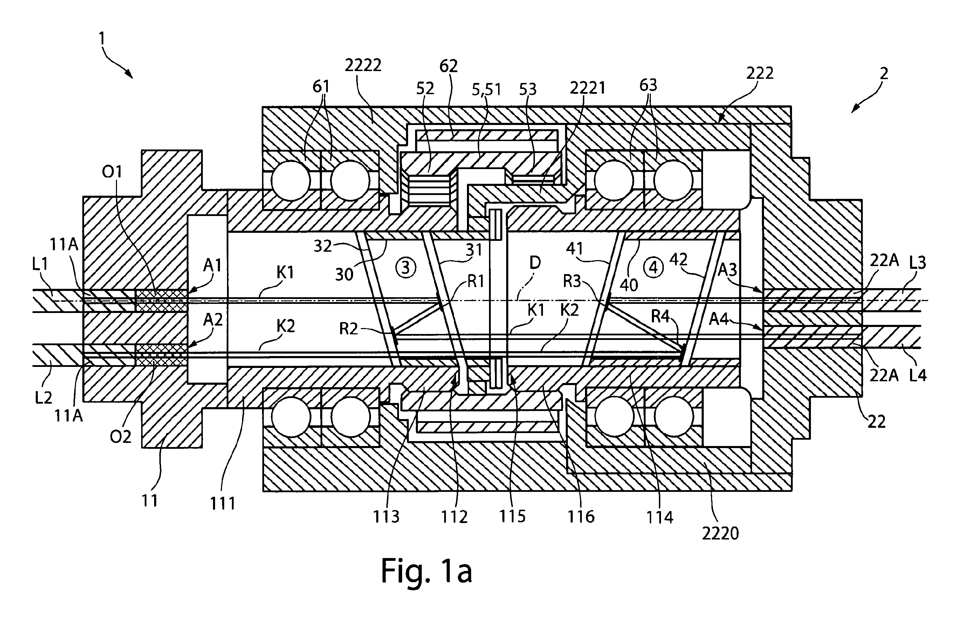

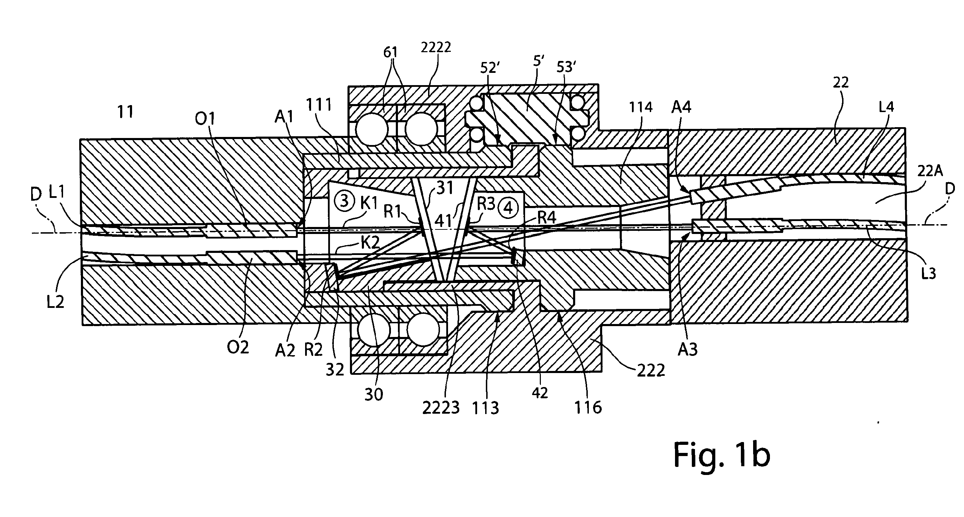

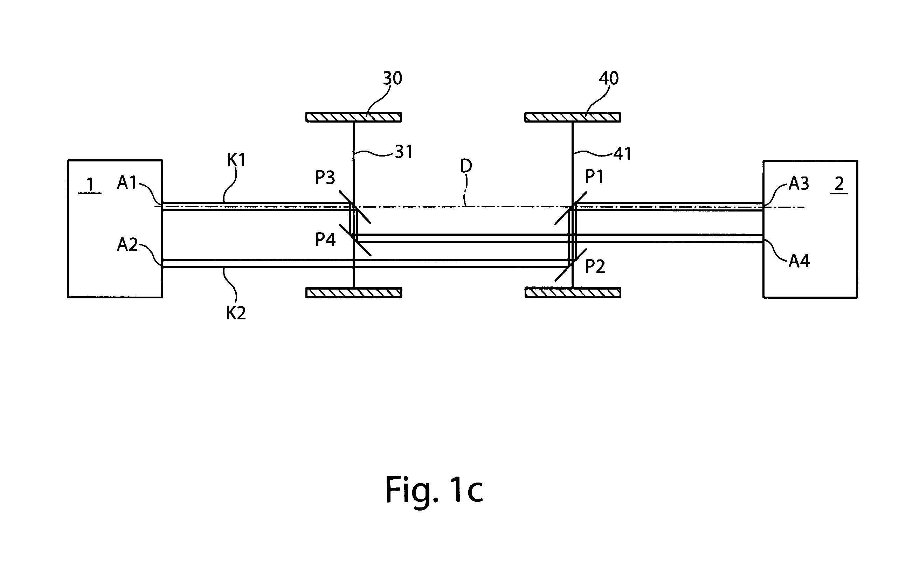

Fig. 1 a zeigt einen Längsschnitt durch eine optische Drehkupplung zur Übertragung optischer Signale längs wenigstens zwei separater optischer Übertragungskanäle K1, K2 mit zwei um eine gemeinsame Drehachse D relativ zueinander drehbar gelagerten Kupplungskomponenten 1, 2. Jede der beiden, um die Drehachse D drehbar zueinander gelagerten Kupplungskomponenten 1, 2 verfügen über einen Aufnahmekörper 11, 22, in dem hohlkanalartig ausgebildete Ausnehmungen 11A, 22A für die Aufnahme von jeweils zwei Lichtwellenleiter L1, L2, sowie L3, L4 eingebracht sind. Die einzelnen Lichtwellenleiter L1, L2, L3, L4 enden unmittelbar oder unter Zwischenschaltung einer zusätzlichen optischen Abbildungseinheit O1, 02, wie dies als optionale Variante im Aufnahmekörper 11 dargestellt ist, längs an den Aperturen A1, A2, A3, A4. Die Aperturen stellen freie Öffnungen innerhalb der Kupplungskomponenten 1, 2 dar, über die Licht aus oder in die jeweiligen Lichtwellenleiter L1, L2, L3, L4 längs der optischen Übertragungskanäle K1, K2 ein- bzw. austreten kann. Die an der ersten Kupplungskomponente 1 vorgesehenen Aperturen A1, A2 sind derart orientiert, so dass sie den an der zweiten Kupplungskomponente 2 angebrachten Aperturen A3, A4 längs der Drehachse D zugewandt orientiert sind. Die jeweils ersten Aperturen A1, A3 der ersten und zweiten Kupplungskomponenten 1, 2 befinden sich jeweils zentrisch zur Drehachse D innerhalb der ihr zugeordneten Kupplungskomponenten 1, 2, wohingegen die jeweils zweiten Aperturen A2, A4 zur Drehachse D radial beabstandet angeordnet sind. Nicht notwendigerweise, jedoch in vorteilhafter Weise ist die zweite Apertur A2 der ersten Kupplungskomponente 1 in einem radialen Abstand zur Drehachse D angeordnet, der sich vom radialen Abstand unterscheidet, mit dem die zweite Apertur A4 der zweiten Kupplungskomponente 2 von der Drehachse D beabstandet ist. Der unterschiedliche radiale Abstand äußert sich insbesondere in der räumlich getrennten Strahlführung bzw. Lichtwege längs der beiden optischen Übertragungskanäle K1, K2 jeweils zwischen den Aperturen A1, A2 bzw. A3, A4. So gelangt der durch die erste Apertur A1 der ersten Kupplungskomponente 1 hindurch tretende Lichtweg, der dem ersten optischen Übertragungskanal K1 entspricht, über eine geeignete Strahlumlenkung, auf die im weiteren noch näher eingegangen wird, in die zweite Apertur A4 der zweiten Kupplungskomponente 2. Hingegen wird der zweite optische Übertragungskanal K2, der durch die zweite Apertur A2 der ersten Kupplungskomponente hindurch tritt, durch geeignete Umlenkung in die erste Apertur A3 der zweiten Kupplungskomponente 2 abgebildet. Aufgrund der unterschiedlichen radialen Beabstandung der jeweils zweiten Aperturen A2, A4 von der Drehachse D wird eine im wesentlichen separierte Strahlführung beider optischer Übertragungskanäle K1 und K2 zwischen den Aperturen innerhalb der optischen Drehkupplung ermöglicht.

Die erste Kupplungskomponente 1 umfasst neben dem bereits erwähnten Aufnahmekörper 11 für die Fixierung der Lichtwellenleiter L1, L2 einen hülsenartig ausgebildeten ersten Abschnitt 111, der einstückig mit dem Aufnahmekörper 11 oder trennbar fest mit diesem, insbesondere drehfest zur Drehachse D gefügt ist. Der im Wesentlichen rotationssymmetrisch ausgebildete hülsenartige erste Abschnitt 111 umfasst einen inneren Hohlraum, der einseitig vom Aufnahmekörper 11 abgeschlossen ist. Das längs zur Drehachse dem Aufnahmekörper 11 abgewandte Ende des hülsenartig ausgebildeten Abschnittes 111 ist als offen ausgebildetes Hülsenende 112 ausgebildet. Ferner weist der hülsenartig ausgebildete erste Abschnitt 111 radial außenseitig im Bereich des offen ausgebildeten ersten Hülsenendes 112 eine in Umfangsrichtung vollständig umlaufende Verzahnungsstruktur 113 auf, die in ein Hohlradgetriebe 5 eingreift. Das Hohlradgetriebe 5 besteht aus einem Hohlzylinder 51, dessen Zylinderachse koparallel versetzt zur Drehachse D angeordnet ist. Ferner sind an der Mantelinnenseite des Hohlzylinders 51 zwei axial beabstandete Getriebeverzahnungen 52 und 53 innen umlaufend angebracht, von denen eine der beiden Getriebeverzahnungen 52 in bereichsweisem Eingriff mit der Verzahnungsstruktur 113 des hülsenartig ausgebildeten ersten Abschnittes 111 tritt. In der Bilddarstellung gemäß Fig. 1 a steht die Verzahnungsstruktur 113 der dargestellten unteren Hälfte des hülsenartig ausgebildeten ersten Abschnittes 111 in Eingriff mit der Getriebeverzahnung 52 des Hohlradgetriebes 51.

Die Getriebeeinheit 5 dient zur Übertragung der Drehbewegung der ersten Kupplungskomponente 1, umfassend den Aufnahmekörper 11 und den Abschnitt 111, auf einen längs der Drehachse D axial zum hülsenartig ausgebildeten ersten Abschnitt 111 beabstandet gelagerten hülsenartig ausgebildeten zweiten Abschnitt 114, der vorzugsweise ebenfalls rotationssymmetrisch ausgebildet ist und einen längs zur Drehachse D zweiseitig offenen zylindrischen Hohlraum umfasst. Der hülsenartig ausgebildete zweite Abschnitt 114 weist an seinem Außenumfang im Bereich seines dem hülsenartig ausgebildeten ersten Abschnitt 111 zugewandten Hülsenendes 115 eine Verzahnungsstruktur 116 auf, die längs ihres in der Bilddarstellung unteren Umfangssegmentbereiches in Eingriff mit der am Hohlzylinder 51 des Hohlradgetriebes 5 innen liegend angebrachten Getriebeverzahnung 53 tritt.

Die über das Hohlradgetriebe 5 drehbar miteinander verbundenen Komponenten, d.h. der Aufnahmekörper 11, der drehfest mit diesem verbundene, hülsenartig ausgebildete erste Abschnitt 111 sowie der hülsenartig ausgebildete zweite Abschnitt 114 stellen gesamtheitlich Komponenten der ersten Kupplungskomponente 1 dar und sind über Drehlager 61, 62 und 63 gegenüber der zweiten Kupplungskomponente 2 drehbar gelagert.

Die zweite Kupplungskomponente weist ihrerseits ebenso einen Aufnahmekörper 22 auf, in dem Ausnehmungen 22A für die Aufnahme zweier Lichtwellenleiter L3 und L4 eingebracht sind, so dass die den Lichtwellenleiter L3, L4 zuordenbaren Aperturen A3, A4 innwandig zur Drehkupplung der ersten Kupplungskomponente 1 zugewandt orientiert sind. Fest mit dem Aufnahmekörper 22 ist ein hülsenartig ausgebildeter dritter Abschnitt 222 verbunden, der über einen weitgehend rotationssymmetrischen Hülsenabschnitt 2220 verfügt, der einen inneren Hohlraum radial umschliesst, in den der hülsenartig ausgebildete zweite Abschnitt 114 der ersten Kupplungskomponente 1 zumindest teilweise axial hineinragt und sich radial über das Drehlager 63 an dem Hülsenabschnitt 2220 abstützt.

Ferner weist der hülsenartig ausgebildete dritte Abschnitt 222 einen nicht rotationssymmetrisch ausgebildeten Hülsenkragen 2221 auf, der sich axial zur Drehachse D an den rotationssymmetrischen Hülsenabschnitt 2220 einstückig anschließt und axial den innen liegend angeordneten hülsenartig ausgebildeten zweiten Abschnitt 114 in Richtung zur ersten Kupplungskomponente 1 axial überragt. Der Hülsenkragen 2221 durchragt einen radialen Zwischenspalt zwischen der radial außen liegenden Getriebeverzahnung 53 des Hohlradgetriebes 5 und der Verzahnung 116 des hülsenartig ausgebildeten zweiten Abschnittes 114. Das der ersten Kupplungskomponente 1 axial zugewandte Ende des Hülsenkragens 2221 ist mit der so genannten ersten optischen Umlenkeinheit 3 verbunden, die sich aus den folgenden Komponenten zusammensetzt: Ein hülsenartig ausgebildetes Halteelement 30, zwei transparente Trägerelemente 31, 32, vorzugsweise in Form transparenter, dünnwandiger Glasscheiben, sowie zwei optische Reflektoren R1, R2, vorzugsweise in Form hoch reflektierender Beschichtungen, vorzugsweise Metallbeschichtungen, besonders vorzugsweise Goldbeschichtungen, von denen der optische Reflektor R1 zentrisch zur Drehachse D angebracht ist und der optische Reflektor R2 mit einem Abstand zur Drehachse D am Trägerelement 32 angeordnet ist, der dem radialen Abstand der zweiten Apertur A4 der zweiten Kupplungskomponente 2 entspricht. Die plattenförmig ausgebildeten Trägerelemente 31, 32 sind jeweils starr am hülsenartigen bzw. hohzylinderförmigen Halteelement 30 verbunden und parallel zueinander geneigt zur Drehachse D angebracht, so dass der erste optische Übertragungskanal K1 durch zweifache Reflexion eineindeutig von der ersten Apertur A1 der ersten Kupplungskomponente 1 auf die zweite Apertur A4 der zweiten Kupplungskomponente 2 abgebildet wird oder umgekehrt. Obgleich die erste optische Umlenkeinheit 3 drehfest mit der zweiten Kupplungskomponente 2 verbunden ist und somit relativ zum des hülsenartig ausgebildeten ersten Abschnitt 111 drehbar gelagert ist, ist das Reflexionsereignis am ersten optischen Reflektor R1 rotationsinvariant. Die Reflexion am zweiten optischen Reflektor R2 ist hingegen raumfest zum Ort des ersten optischen Reflektors R1 und der zweiten Apertur A4 der zweiten Kupplungskomponente 2. Aufgrund der transparenten Ausbildung beider Trägerelemente 31, 32 sowie der lokalen Begrenzung des zweiten optischen Reflektors R2, ist es möglich, dass der zweite optische Übertragungskanal K2 beide transparente Trägerelemente 31,32 verlustfrei durchdringt, vorzugsweise in einem radialen Bereich, der radial außerhalb der Anbringung des zweiten optischen Reflektors R2 liegt.

Zur optischen Umlenkung des zweiten optischen Übertragungskanals K2 sorgt die mit der ersten Kupplungskomponente 1 mit rotierende zweite optische Umlenkeinheit 4, die fest mit dem hülsenartig ausgebildeten zweiten Abschnitt 114 verbunden ist. Die zweite optische Umlenkeinheit 4 weist ebenso ein hülsenartig ausgebildetes Halteelement 40 auf, an dem axial beabstandet zwei transparent ausgebildete Trägerelemente 41, 42 angebracht sind, die gleichsam wie im Falle der ersten optischen Umlenkeinheit 3, vorzugsweise aus transparenten dünnwandigen Glasscheiben bestehen. Beide Trägerelemente 41, 42 sind starr über das Halteelement 40 miteinander verbunden, das wiederum drehfest mit dem hülsenartig ausgebildeten zweiten Abschnitt 114 gefügt ist.

Zur Umlenkung des zweiten optischen Übertragungskanals K2 ist am Trägerelement 42 in einem lokal begrenzten Bereich ein optischer Reflektor R4 unter einem radialen Abstand zur Drehachse D angebracht, der identisch ist zum radialen Abstand der zweiten Apertur A2 der ersten Kupplungskomponente 1. Auf diese Weise ist es möglich, den dem zweiten optischen Übertragungskanal K2 zuordenbaren Strahlengang weitgehend parallel zur Drehachse D anzuordnen, der die transparenten Trägerelemente 31, 32 sowie auch 41 verlustfrei durchsetzt. Am Ort des optischen Reflektors R4 wird der zweite optische Übertragungskanal K2 zur weiteren Reflexion auf den mittig zur Drehachse D angebrachten optischen Reflektor R3 umgelenkt, der den zweiten optischen Übertragungskanal K2 durch die erste Apertur A3 der zweiten Kupplungskomponente 2 richtet.

In bevorzugter Weise ist das Hohlradgetriebe 5 derart ausgebildet, so dass der hülsenartig ausgebildete zweite Abschnitt 114 sowie die starr mit diesem verbundene zweite optische Umlenkeinheit 4 drehfest mit dem hülsenartig ausgebildeten ersten Abschnitt 111 der ersten Kupplungskomponente 1 um die Drehachse D rotiert. Im Falle eines von einem 1:1-Getriebe-Übersetzungsverhältnisses abweichenden Verhältnisses ist es erforderlich, den optischen Reflektor R4 auf dem transparenten Trägerelement 42 in Form einer Ringscheibe auszubilden, durch die stets eine unterbrechungsfreie Strahlumlenkung des zweiten optischen Übertragungskanals K2 unabhängig vom Rotationszustand beider Kupplungskomponenten 1, 2 gewährleistet ist.

Zur weiteren radialen Abstützung des Drehlagers 61 ist ein die Drehkupplung umfassendes Gehäuse 2222 vorgesehen, das drehfest sowohl mit dem hülsenartig ausgebildeten dritten Abschnitt 222 sowie dem Aufnahmekörper 22 der zweiten Kupplungskomponente 2 fest verbunden ist. An dem Gehäuse 2222 stütz sich ebenso das Drehlager 62 zur drehbaren Lagerung und radialen Umfassung des Hohlradgetriebes 5 ab. Somit umfassen die zweite Kupplungskomponente 2 folgende Komponenten: der Aufnahmekörper 22, der Hülsenabschnitt 2220 mit der daran fest angebrachten ersten optischen Umlenkeinheit 3 sowie das Gehäuse 2222.

In Figur 1b ist ein alternatives Ausführungsbeispiel für die Realisierung einer optischen Drehkupplung illustriert, zu deren Erläuterung gleich wirkende Komponenten, die bereits zu der in der Figur 1 a gezeigten optischen Drehkupplung erläutert worden sind, mit bereits erläuterten Bezugszeichen versehen werden. Im Unterschied zu der in Figur 1 a illustrierten Drehkupplung ist zur Drehübertragung der Drehbewegung der ersten Kupplungskomponente 1, umfassend den Aufnahmekörper 11 sowie den hülsenartig ausgebildeten ersten Abschnitt 111, auf den hülsenartig ausgebildeten zweiten Abschnitt 114 ein sog. Stirnradgetriebe 5' vorgesehen, dessen Getriebeverzahnungen 52', 53' in Eingriff stehen mit jeweils gegenkonturierten Verzahnungsstrukturen 113, 116, die jeweils an lokalen Bereichen des Außenumfanges des hülsenartig ausgebildeten ersten Abschnittes 111 einerseits sowie des hülsenartig ausgebildeten zweiten Abschnittes 114 andererseits vorgesehen sind. Das Stirnradgetriebe 5' befindet sich als solitäre Getriebeeinheit seitlich zur Drehachse D in einem Gehäusewandteil 2222, das als ein- oder mehrteilig ausgeführte Komponente mit der zweiten Kupplungskomponente 2 verbunden ist bzw. Teil der zweiten Kupplungseinheit ist.

Die zweite Kupplungskomponente 2 umfasst einen Aufnahmekörper 22, der gleichsam dem Ausführungsbeispiel in Figur 1a Ausnehmungen 22A zur Aufnahme der Lichtwellenleiter L3 und L4 besitzt, einen hülsenartig ausgebildeten dritten Abschnitt 222, der einen inneren Hohlraum radial umgibt, in den der hülsenartig ausgebildete zweite Abschnitt 114 hineinragt, der durch den Eingriff der Verzahnungsstruktur 116 in die Stirnradgetriebeverzahnung 53' drehbar um die Drehachse D gefasst ist. Ferner dient der hülsenartig ausgebildete zweite Abschnitt 114 zugleich auch als Halteelement für die zweite optische Umlenkeinheit 4, die sich aus den Trägerelementen 41, 42 zusammensetzt, an denen die optischen Reflektoren R3, R4 fest angebracht sind. Im Unterschied zum Ausführungsbeispiel gemäß Figur 1a sieht die zweite optische Umlenkeinheit 4 lediglich ein transparentes Trägerelement 41 vor, das von den Strahlengängen längs des ersten und zweiten optischen Übertragungskanals K1, K2 durchsetzt wird. Das jeweils andere Trägerelement 42 befindet sich vollständig radial beabstandet zur Drehachse D außerhalb der Strahlengänge beider optischer Übertragungskanäle und sieht eine hochreflektierende Schicht als optischen Reflektor R4 vor. Zur Umlenkung des zweiten optischen Übertragungskanals K2 wird der durch die zweite Apertur A2 der ersten Kupplungskomponente 1 hindurchtretende Lichtweg, der parallel und beabstandet zur Drehachse D verläuft an dem radial zur Drehachse D beabstandet angebrachten optischen Reflektor R4 zu dem mittig zur Drehachse angeordneten optischen Reflektor R3 umgelenkt, von dem der Lichtweg weiter koparallel zur Drehachse D in die erste Apertur A3 der zweiten Kupplungskomponente 2 umgelenkt wird. Da sich die zweite optische Umlenkeinheit 4 relativ zur ersten Apertur A3 der zweiten Kupplungskomponente 2 dreht, ist die Umlenkung des zweiten optischen Übertragungskanals K2 am mittig zur Drehachse D angebrachten optischen Reflektor R3 rotationsinvariant. Durch das Stirnradgetriebe 5' wird hingegen bezüglich des Reflektionsereignisses am Ort des optischen Reflektors R 4 dafür gesorgt, dass die zweite Apertur A2 der ersten Kupplungskomponente 1 bewegungssynchron mit der azimuthalen Lage des optischen Reflektors R4 am hülsenartig ausgebildeten zweiten Abschnitt 114 mit rotiert.

### Demgegenüber ist die erste optische Umlenkeinheit 3 drehfest mit der zweiten Kupplungskomponente 2 verbunden. Hierzu ist ein hülsenartig ausgebildeter Formabschnitt 2223 einstückig oder mehrteilig lösbarfest mit dem hülsenartig ausgebildeten dritten Abschnitt 222 verbunden und dient als drehfeste Tragstruktur für das Halteelement 30 der ersten optischen Umlenkeinheit 3, an der das transparente Trägerelement 31 mit dem daran mittig zur Drehachse angebrachten optischen Reflektor R1 sowie dem zweiten optischen Reflektor R2 angebracht sind. Im Unterschied zur Ausführungsform gemäß Figur 1 a ist der radial zur Drehachse D beabstandet angeordnete optische Reflektor R2 nicht auf einem transparenten Trägerelement angebracht, der zugleich von wenigstens einem der beiden optischen Übertragungskanäle K1, K2 durchsetzt wird, vielmehr ist in diesem Fall der optische Reflektor R2 mittel- oder unmittelbar am Halteelement 30 selbst aufgebracht in einem radial zur Drehachse D beabstandeten Bereich, der radial deutlich außerhalb der Strahlengänge beider optischer Übertragungskanäle K1, K2 liegt.

Die in Figur 1b illustrierte optische Drehkupplung weist somit lediglich zwei transparente, vorzugsweise als Glasscheiben ausgeführte Trägerelemente 31, 41 auf, die von beiden optischen Übertragungskanälen K1, K2 durchsetzt werden. Beide radial zur Drehachse D unmittelbar am Halteelement 30 bzw. dem als Halteelement dienenden hülsenartig ausgebildeten zweiten Abschnitt 114 angebrachte optische Reflektoren R2, R4 sind derart radial zur Drehachse D angeordnet, so dass sie die jeweiligen optischen Übertragungskanäle K1, K2 nicht tangieren.

Um den Gesamtdurchmesser der optischen Drehkupplung möglichst gering zu dimensionieren, ist die zweite Apertur A4 der zweiten Kupplungskomponente 2 zur Drehachse D zugewandt geneigt angeordnet, so dass der zwischen dem optischen Reflektor R2 der ersten optischen Umlenkeinheit 3 und der zweiten Apertur A4 der zweiten Kupplungskomponente verlaufende Lichtweg nicht parallel zur Drehachse sondern diese schneidend verläuft.

Gleichsam wie im Ausführungsbeispiel gemäß Figur 1 a ist auch die erste Kupplungskomponente 1 radial vom Drehlager 61 umgeben, das sich radial nach außen an der die optische Drehkupplung weitgehend zylinderförmig umgebenden Gehäusewand 2222, die einstückig oder mehrteilig mit der zweiten Kupplungskomponente 2 verbunden ist, abstützt.

In Figur 1c ist eine stark schematisierte alternative Darstellung zur Ausführung der ersten und zweiten optischen Umlenkeinheit anstelle der in Figur 1 a illustrierten optischen Umlenkeinheiten 3, 4 gezeigt. So besteht die zweite optische Umlenkeinheit 4 gleichsam der in Figur 1a illustrierten Darstellung aus einem hülsenförmig ausgebildeten Halteelement 40 das im Unterschied zu der in Figur 1 a gezeigten Version lediglich ein einziges transparentes Trägerelement 41 umfasst. An diesem, vorzugsweise in Form einer transparenten Glasplatte ausgebildeten Trägerelement 41 ist mittig zur Drehachse D ein erstes Umlenkprisma P1 und radial zu P1 beabstandet ein zweites Umlenkprisma P2 angebracht. Beide Umlenkprismen P1, P2 können lokal auf jeweils der gleichen Seite des als Glasplatte ausgebildeten Trägerelementes 41 angeordnet sein. Ähnlich aufgebaut ist die erste optische Umlenkeinheit 3, an deren hülsenartig ausgebildeten Halteelement 30 ein einziges als transparente Glasplatte ausgebildetes Trägerelement 31 angebracht ist, an dem ebenfalls zwei Prismen P3, P4 angebracht sind. Aufgrund des geringeren radialen Abstandes des Prismas P4 von der Drehachse D ist es möglich beide Prismenflächen P3, P4 in einem einzigen Prismenkörper zu integrieren. Wie dem Lichtweg beider optischer Übertragungskanäle K1, K2 zu entnehmen ist, vermag somit gleichsam dem Ausführungsbeispiel gemäß Figur 1 a das Prismenpaar P3, P4 den ersten optischen Übertragungskanal K1 von der ersten Apertur A1 der ersten Kupplungskomponente 1 in die zweite Apertur A4 der zweiten Kupplungskomponente 2 abzubilden. Dementsprechend vermögen die Prismenfläche P1, P2 die zweite Apertur A2 der ersten Kupplungskomponente 1 auf die mittig zur Drehachse D angeordnete erste Apertur A3 der zweiten Kupplungskomponente 2 abzubilden.

In allen illustrierten Ausführungsbeispielen sind die optischen Übertragungskanäle bidirektional einsetzbar, d. h. die optische Drehkupplung hat keine vorgegebene Durchstrahlungsrichtung.

Die neuartige optische Drehkupplung ist aufgrund der rein mechanischen Lösung zur Drehübertragung weitaus robuster und störunanfälliger gegenüber möglicherweise auftretenden äusseren Störungen, wie bspw. Vibrationen, externen Magnetfeldern etc.. Hinzukommt, dass durch die mechanisch starre Lagerung der jeweils einen optischen Übertragungskanal umlenkenden optischen Reflektoren Dämpfungsverluste minimiert und Abbildungsfehler aufgrund exakt vornehmbarer Reflektororientierungen ausgeschlossen werden können. Auch ist die Montage der lösungsgemäß ausgebildeten optischen Drehkupplung durch entsprechende Vorfertigungen und Vorabjustierungen präzise und kostengünstig durchzuführen.

### Bezugszeichenliste

- 1: Erste Kupplungskomponente
- 11: Aufnahmekörper
- 11A: Ausnehmungen
- 111: hülsenartig ausgebildeter erster Abschnitt
- 112: offenes Hülsenende
- 113: Verzahnungsstruktur
- 114: hülsenartige ausgebildeter zweiter Abschnitt
- 115: Offenes Hülsenende
- 116: Verzahnungsstruktur
- 2: zweite Kupplungskomponente
- 22: Aufnahmekörper
- 22A: Ausnehmungen
- 222: hülsenartig ausgebildeter dritter Abschnitt
- 2220: Hülsenabschnitt
- 2221: Hülsenkragen
- 2222: Gehäuse
- 2223: hülsenartiger Formabschnitt
- 3: erste optische Umlenkeinheit
- 30: hülsenartiges Halteelement
- 31, 32: transparentes Trägerelement
- 4: zweite optische Umlenkeinheit
- 40: hülsenartiges Halteelement
- 41, 42: transparentes Trägerelement
- R1, R2, R3, R4: optische Reflektoren
- 5: Getriebe, Hohlradgetriebe
- 51: Hohlzylinder
- 52, 53: Getriebeverzahnung
- 5': Stirnradgetriebe
- 52', 53': Stirnradgetriebeverzahnung
- 61, 62, 63: Drehlager
- A1: erste Apertur der ersten Kupplungskomponente
- A2: zweite Apertur der ersten Kupplungskomponente
- A3: erste Apertur der zweiten Kupplungskomponente
- A4: zweite Apertur der zweiten Kupplungskomponente
- L1, L2, L3, L4: Lichtwellenleiter
- D: Drehachse
- K1: erster optischer Übertragungskanal
- K2: zweiter optischer Übertragungskanal
- O1, O2: optische Abbildungseinheit
- P1-P4: Umlenkprisma

## Patentansprüche

1. Drehkupplung zur Übertragung optischer Signale längs wenigstens zwei separater optischer Übertragungskanäle (K1, K2), mit einer ersten und einer zweiten um eine gemeinsame Drehachse (D) relativ zueinander drehbar gelagerten Kupplungskomponente (1, 2), die jeweils wenigstens zwei Ausnehmungen (11A, 22A) für die Aufnahme zweier Lichtwellenleiter (L1, L2, L3, L4) aufweisen, die innerhalb der jeweiligen Kupplungskomponente (1, 2) enden und denen Aperturen (A1, A2, A3, A4) zugeordnet sind, über die optische Signale mittel- oder unmittelbar ein- und/oder auskoppelbar sind, wobei pro Kupplungskomponente (1, 2) jeweils eine erste Apertur (A1, A3) mittig zur Drehachse (D) und eine zweite Apertur (A2, A4) radial zur Drehachse (D) beabstandet angebracht sind,
sowie mit wenigstens einer ersten und zweiten optischen Umlenkeinheit (3, 4),
- von denen die erste optische Umlenkeinheit (3) den durch die erste Apertur (A1) der ersten Kupplungskomponente (1) sowie durch die zweite Apertur (A4) der zweiten Kupplungskomponente (2) verlaufenden ersten optischen Übertragungskanal (K1), und die zweite optische Umlenkeinheit (4) den durch die zweite Apertur (A2) der ersten Kupplungskomponente (1) sowie durch die erste Apertur (A3) der zweiten Kupplungskomponente (2) verlaufenden zweiten optischen Übertragungskanal (K2) umlenkt
und
- von denen die erste optische Umlenkeinheit (3) mit der zweiten Kupplungskomponente (2) und die zweite optische Umlenkeinheit (4) mit der ersten Kupplungskomponente (1) drehbar um die Drehachse (D) in Wirkverbindung stehen, wobei zwischen der zweiten optischen Umlenkeinheit (4) und der mit dieser drehbar in Wirkverbindung stehenden ersten Kupplungskomponente (1) längs der Drehachse (D) die erste optische Umlenkeinheit (3) angeordnet ist,
**dadurch gekennzeichnet, dass** beide optische Umlenkeinheiten (3, 4) wenigstens zwei optische Reflektoren (R1, R2, R3, R4) umfassen, die jeweils mittel- oder unmittelbar über ein Halteelement (30, 40) starr miteinander verbunden sind, und dass das Halteelement (40) der zweiten optischen Umlenkeinheit (4) über eine die drehbare Wirkverbindung realisierende mechanische Getriebeeinheit (5) mit der ersten Kupplungskomponente (1) mittel- oder unmittelbar in Eingriff steht.

2. Drehkupplung nach Anspruch 1,
**dadurch gekennzeichnet, dass** das Halteelemente (30) der ersten optischen Umlenkeinheit (3) drehfest und mechanisch starr mit der zweiten Kupplungskomponente (2) mittel- oder unmittelbar verbunden ist.

3. Drehkupplung nach Anspruch 1 oder 2,
**dadurch gekennzeichnet, dass** die Getriebeeinheit (5) ein Stirn- oder Hohlradgetriebe ist.

4. Drehkupplung nach einem der Ansprüche 1 bis 3,
**dadurch gekennzeichnet, dass** die Halteelemente (30, 40) jeweils als länglicher Hohlkörper mit einem in Längsrichtung des Hohlkörpers vollständig durchsetzenden Hohlkanal ausgebildet ist, und
dass die Drehachse (D) den Hohlkanal in Längsrichtung des Hohlkörpers mittig durchsetzt.

5. Drehkupplung nach einem der Ansprüche 1 bis 4,
**dadurch gekennzeichnet, dass** die erste und zweite optische Umlenkeinheit (3, 4) jeweils wenigstens ein Trägerelement (31, 41) vorsieht, das für wenigstens einen optischen Übertragungskanal (K1, K2) transparent ist und an dem die wenigstens zwei optischen Reflektoren (R1, R2, R3, R4) zur Umlenkung eines Übertragungskanals (K1, K2) angebracht sind,
dass jeweils einer der beiden Reflektoren (R1, R3) mittig zur Drehachse (D) angebracht ist, und
dass der andere der beiden Reflektoren (R2, R4) radial beabstandet zur Drehachse angebracht ist und eine diesem bei Rotation um die Drehachse zuordenbare Ringfläche überstreift, die der andere, das transparente Trägerelement durchsetzende, optische Übertragungskanal nicht schneidet.

6. Drehkupplung nach Anspruch 5,
**dadurch gekennzeichnet, dass** das die Reflektoren (R1, R2, R3, R4) Flächen eines Prismas (P1, P2, P3, P4) oder Flächen zweier getrennter Prismen darstellen, und
dass das Prisma oder die Prismen an einer Oberfläche des Trägerelementes derart gefügt ist /sind.

7. Drehkupplung nach einem der Ansprüche 1 bis 4,
**dadurch gekennzeichnet, dass** die erste und zweite optische Umlenkeinheit (3, 4) jeweils wenigstens zwei Trägerelemente (31, 32, 41, 42) vorsieht, die für wenigstens einen optischen Übertragungskanal (K1, K2) transparent und längs zur Drehachse (D) zueinander beabstandet am Halteelement (30, 40) befestigt sind, und
dass an einem der wenigstens zwei Trägerelement (31, 32, 41, 42) einer der beiden Reflektoren (R1, R3) mittig zur Drehachse (D) angebracht ist,
dass am anderen der wenigstens zwei Trägerelemente der andere der beiden Reflektoren (R2, R4) radial zur Drehachse (D) beabstandet angebracht ist, wobei der radial beabstandet zur Drehachse (D) angebrachte Reflektor (R2, R4), eine diesem bei Rotation um die Drehachse zuordenbare Ringfläche überstreift, die den anderen, beide transparente Trägerelemente durchsetzenden, optischen Übertragungskanal nicht schneidet.

8. Drehkupplung nach Anspruch 7,
**dadurch gekennzeichnet, dass** die separat an den Trägerelementen (31, 32, 41, 42) angebrachten Reflektoren (R1, R2, R3, R4) jeweils als eine hoch reflektierende, lokal begrenzte Beschichtung ausgebildet sind.

9. Drehkupplung nach einem der Ansprüche 1 bis 4,
**dadurch gekennzeichnet, dass** die erste und zweite optische Umlenkeinheit (3, 4) jeweils ein Trägerelement (31, 41) vorsieht, das für wenigstens einen optischen Übertragungskanal (K1, K2) transparent ist und den mittig zur Drehachse (D) angeordneten Reflektor (R1, R3) aufweist, und
dass der andere Reflektor (R2, R4) mit einem radialen Abstand zur Drehachse (D) am Halteelement (30, 40) mittel- oder unmittelbar angebracht ist, dessen radialer Abstand zur Drehachse (D) größer ist als der radiale Abstand zur Drehachse (D) mit dem die jeweils zweite Apertur (R2, R4) an der ersten und zweiten Kupplungskomponente (1, 2) angebracht ist.

10. Drehkupplung nach einem der Ansprüche 5 bis 9,
**dadurch gekennzeichnet, dass** das wenigstens eine Trägerelement (31, 32, 41, 42) in Form eines planparallelen, transparenten Plattenelementes ausgebildet ist, vorzugsweise als Glasplättchen.

11. Drehkupplung nach Anspruch 4 sowie einem der Ansprüche 5 bis 10,
**dadurch gekennzeichnet, dass** dem wenigstens einen Trägerelement (31, 41) eine den wenigstens einen optischen Reflektor tragende, ebene Oberfläche zugeordnet ist, und dass das wenigstens eine Trägerelement mit dem Halteelement derart fest verbunden ist, dass die Oberfläche des Trägerelementes die Längsrichtung des Hohlkanals mit einem Winkel α = 90 °± 45° schneidet und dabei den Hohlkanal in seinem Querschnitt wenigstens teilweise durchsetzt.

12. Drehkupplung nach einem der Ansprüche 1 bis 11,
**dadurch gekennzeichnet, dass** die erste Kupplungskomponente (1) einen Aufnahmekörper (11) vorsieht, in dem die wenigstens zwei Ausnehmungen (11A, 22A) für die Aufnahme der wenigstens zwei Lichtwellenleiter (L1, L2) enthalten ist,
dass die erste Kupplungskomponente (1) einen ersten sich mittel- oder unmittelbar an den Aufnahmekörper (11) anschliessenden, längs der Drehachse (D) erstreckenden, hülsenartig ausgebildeten ersten Abschnitt (111) vorsieht,
wobei der erste Abschnitt ein offen ausgebildetes erstes Hülsenende (112) aufweist und einen Hohlraum radial umschliesst, in den durch das offene erste Hülsenende (112) das die erste optische Umlenkeinheit (3) tragende Halteelement (30) hineinragt,
wobei das Halteelement (30) über einen hülsenartig ausgebildeten, mit der zweiten Kupplungskomponente (2) verbundenen Abschnitt (222) mittel- oder unmittelbar drehfest verbunden ist, der ein offen ausgebildetes zweites Hülsenende (115) aufweist und einen Hohlraum radial umschliesst, in das durch das offene zweite Hülsenende (115) das die zweite optische Umlenkeinheit (4) tragende Haltelement (40) hineinragt, und
dass die mechanische Getriebeeinheit (5) im Bereich des ersten Hülsenendes (112) mit dem ersten hülsenartigen Abschnitt (111) sowie mittel- oder unmittelbar mit dem Haltelement (40) der zweiten optischen Umlenkeinheit in Eingriff steht.

13. Drehkupplung nach Anspruch 12,
**dadurch gekennzeichnet, dass** die mechanische Getriebeeinheit (5) radial aussenliegend sowohl zum ersten hülsenartigen Abschnitt als auch zum ersten Haltelement angeordnet ist.

14. Drehkupplung nach einem der Ansprüche 1 bis 13,
**dadurch gekennzeichnet, dass** die erste und zweite Kupplungskomponente (1, 2) jeweils Ausnehmungen (11A, 22A) für wenigstens einen ersten und zweiten Lichtwellenleiter (L1, L2, L3, L4) vorsehen, sodass ein Ende des ersten Lichtwellenleiters (L1, L3) die erste Apertur (A1, A3) und ein Ende des zweiten Lichtwellenleiters (L2, L4) die zweite Apertur (A2, A4) darstellen oder die Enden der Lichtwellenleiter (L1, L2, L3, L4) jeweils mittelbar über wenigstens eine Optikeinheit (01, 02) entsprechend in die jeweils erste (A1, A3) und zweite Apertur (A2, A4) abbildbar sind.
